## Europäisches Patentamt

## European Patent Office

## Office européen des brevets

(11) Veröffentlichungsnummer: **0 088 810**

**A1**

(12) # EUROPÄISCHE PATENTANMELDUNG

(21) Anmeldenummer: 82101985.8

(22) Anmeldetag: 12.03.82

(51) Int. Cl.³: **F 16 D 43/21**
F 16 D 7/02

(43) Veröffentlichungstag der Anmeldung:
21.09.83 Patentblatt 83/38

(84) Benannte Vertragsstaaten:
AT BE CH DE FR GB IT LI LU NL SE

(71) Anmelder: Hochreuter, Johann
Brauhausstrasse 6
D-8800 Ansbach(DE)

(72) Erfinder: Hochreuter, Johann
Brauhausstrasse 6
D-8800 Ansbach(DE)

(74) Vertreter: Flach, Dieter Rolf Paul, Dipl.-Phys. et al,
Patentanwälte Andrae-Flach-Haug Max-Josefs-Platz 6/III
D-8200 Rosenheim(DE)

(54) Lamellen-Sicherheitsrutschkupplung.

(57) Eine Lamellen-Sicherheitsrutschkupplung insbesondere für eine ausgleichsfähige Zahnkupplung mit einer zur Druckbeaufschlagung der Lamellenrutschkupplung (7) vorgesehenen Druckeinrichtung, besteht aus einen Anpreßglied (15), einem Abstützglied (16) und einer dazwischen wirkenden Federeinrichtung (21).

Zur Betätigung der Rutschkupplung, und um insbesondere die Abstützung im abgeschalteten Zustand der Kupplung nach außen hin kräftefrei vorzunehmen, ist eine Schalteinrichtung (25) vorgesehen, die sich über das Anpreßglied (15) und das Abstützglied (16) abstützt, wobei das Anpreßglied (15) und das Abstützglied (16) entgegen der Kraft der Federeinrichtung (21) zusammenpreßbar sind.

Fig. 1

EP 0 088 810 A1

PATENTANWÄLTE

# ANDRAE · FLACH · HAUG · OTTO 0088810

EUROPEAN PATENT ATTORNEYS

. Patentanwalt Dipl.-Phys. Flach, Max-Josefs-Platz 6, D-8200 Rosenheim .

ROSENHEIM
Dipl.-Phys. Dieter Flach
Max-Josefs-Platz 6
D-8200 Rosenheim
Telefon: (0 80 31) 1 93 52
Telegramm: Physicist Rosenheim

MÜNCHEN
Dipl.-Chem. Dr. Steffen Andrae
Dipl.-Ing. Dietmar Haug
Dipl.-Ing. Dr. Dieter Otto
Steinstraße 44
D-8000 München 80
Telefon: (0 89) 48 20 89
Telegramm: pagema München
Telex: 5 216 281 afho d

Johann Hochreuter, Brauhausstraße 6, 8800 Ansbach

1 P 39

------------------------------------------------

Lamellen-Sicherheitsrutschkupplung

------------------------------------------------

Die Erfindung betrifft eine Lamellen-Sicherheitsrutschkupplung, insbesondere für eine ausgleichsfähige Zahnkupplung, nach dem Oberbegriff des Anspruches 1.

Es sind bereits eine Vielzahl von Lamellen-Sicherheitsrutschkupplungen für die unterschiedlichsten Anwendungsbereiche bekannt , unter anderem auch in Verbindung mit einer verlagerungsfähigen Zahnkupplung. Vielfach soll es sich dabei auch um eine ausschaltbare Lamellen-Sicherheitsrutschkupplung bzw. Reibungskupplung handeln. Derartige Lamellen-Sicherheitsrutschkupplungen, insbesondere auch für große Kraftübertragung, werden dabei in der Regel radial ein- und ausgebaut.

Bei einer bereits bekannten Lamellen-Sicherheitsrutschkupplung werden die vorgesehenen Kupplungslamellen beispielsweise unter Federdruck

Johann Hochreuter                    1 P 39

- 2 -

so aneinander gepreßt, daß ein bestimmtes Drehmoment durch Reibschluß übertragen wird. Möglich ist aber auch eine Schaltung und Kraftbeaufschlagung mittels pneumatisch oder hydraulisch betätigbarer Zylinder und Kolben. Darüber hinaus sind solche Lamellen-Sicherheitsrutschkupplungen bekannt, die über ein mechanisches Gestänge kraftschlüssig miteinander verbunden werden.

Derartige Lamellen-Sicherheitsrutschkupplungen werden auch in Verbindung mit ausgleichsfähigen Zahnkupplungen verwendet, die im wesentlichen aus zwei außenverzahnten Nabenkörpern und einer innenzylindrisch, verzahnten Übertragungshülse bestehen, die mit den beiden außenverzahnten Nabenkörpern im Eingriff stehen.
Die Übertragungshülse kann dabei einteilig ausgebildet sein, oder beispielsweise auch aus zwei zusammengeflanschten Teilen bestehen.

Bei Verwendung von ausschaltbaren Lamellen-Sicherheitsrutschkupplungen sind zahlreiche Nachteile bedingt. Wird hierbei nämlich eine mechanische Verspannung für eine vorgesehene Ausschaltvorrichtung vorgesehen, so muß sich diese außerhalb der Kupplung abstützen, wobei die Relations- und Abstützkräfte von den benachbarten Maschinenteilen und Bauwerken aufgenommen werden müssen.

- 3 -

- 3 -

Demgegenüber ist bei Verwendung einer hydraulischen oder pneumatischen Kraftbeaufschlagung der Kupplungslamellen eine rotierende Durchführung der Druckmittel führenden Leitungen durch eine der beiden zu kuppelnden Wellen notwendig. Dies erfordert zusätzliche bauliche Maßnahmen.

Aufgabe der Erfindung ist es eine Lamellen-Sicherheitsrutschkupplung zu schaffen, bei der weder durch eine der zu verbindenden Wellen ein Gestänge greift noch ein Druckmittel zugeführt werden muß.

Die Aufgabe wird erfindungsgemäß entsprechend den im kennzeichnenden Teil des Anspruches 1 angegebenen Merkmalen gelöst. Vorteilhafte Ausgestaltungen der Erfindung im. Sinne der Aufgabenstellung sind in den Unteransprüchen angegeben.

Durch die erfindungsgemäße Lamellen-Sicherheitsrutschkupplung wird eine besonders optimale Schalteinrichtung zur abschaltbaren Kraftbeaufschlagung der Kupplungslamellen geschaffen. Wesentlich ist dabei, daß sich die Schalteinrichtung, die das mittels einer Federeinrichtung druckbeaufschlagte Anpreßglied betätigt, um die Kupplungslamellen mit Druck zu beaufschlagen und somit den Reibschluß ein- bzw. abzuschalten, über ein Abstützglied abstützt. Während des Abschaltvorganges der Lamellen-Sicherheitsrutschkupplung werden somit entgegen der Kraft der Federeinrichtung das Anpreß- und das Abstützglied zusammengedrückt.

Johann Hochreuter                    1 P 39

- 4 -

Die in diesem System auftretenden Kräfte heben sich somit über die Schalteinrichtung auf, sodaß die resultierende Kraft Null wird, und über die Schalteinrichtung keine Rückstellkräfte während des Ausschaltvorganges der Sicherheitsrutschkupllung auf die benachbarten Bauteile wirken.

In einer bevorzugten Ausführungsform nach Anspruch 2 ist dabei die Lamellen-Sicherheitsrutschkupplung derart ausgebildet, daß neben dem kupplungslamellenseitig liegenden Anpreßglied auch das Abstützglied axial verschiebbar angeordnet ist. Dadurch können sowohl das Anpreß-, als auch das Abstützglied unter der Krafteinwirkung der Schalteinrichtung frei zusammengedrückt werden.

In einer Weiterbildung nach Anspruch 3 sind zwei axial verstellbare Betätigungsglieder vorgesehen, die dem jeweiligen Anpreß- bzw. Abstützglied zugeordnet sind, und über die das Ein- und Ausschalten der Lamellen-Sicherheitsrutschkupplung erfolgt.

In einer bevorzugten Ausführungsform nach Anspruch 4 sind an den beiden Betätigungsgliedern radiale Rollen angeordnet, deren Laufflächen mit dem jeweiligen Anpreß- bzw. Abstützglied zusammenwirken. Dadurch wird eine einfache und äußerst günstige Schalteinrichtung zum Ein- und Ausschalten der Sicherheitsrutschkupplung geschaffen. Diese radialen Rollen sind notwendig, da die Betätigungsglieder drehfest angeordnet sind, während sich das Anpreß- und Abstützglied gemeinsam mit der Wellennabe drehen.

Johann Hochreuter                    1 P 39

- 5 -

In einer alternativen Ausführungsform dazu ist es auch möglich, daß das Anpreß- und Abstützglied entsprechende Lager, beispielsweise in Form von Kegelstumpfrollen aufweisen, die mit einer entsprechenden Ablauffläche der Betätigungsglieder zusammenwirken.

In einer vorteilhaften Ausgestaltung der Erfindung werden die Betätigungsglieder zum Ein- und Ausschalten der Lamellen-Sicherheitsrutschkupplung über einen oder mehrere Druckzylinder betätigt, die vorzugsweise hydraulisch oder pneumatisch betrieben werden.

In einer bevorzugten Ausführungsform nach Anspruch 8 ist dabei zumindest ein teleskopartig ausfahrbarer Druckzylinder zwischen den beiden Betätigungsgliedern der Schalteinrichtung vorgesehen, um deren Abstand zueinander einzustellen, um somit letztlich das Anpreß- und das Abstützglied entgegen der Kraft der Federeinrichtung  zusammenzudrücken.

In einer bevorzugten Ausführungsform nach Anspruch 9 umfaßt der Druckzylinder mehrere stirnseitig teleskopartig ausfahrbare Kolben, die mit dem jeweiligen Betätigungsglied verbunden sind.

Um ein Drehen der beiden Betätigungsglieder zueinander zu verhindern, sind in einer vorteilhaften Ausgestaltung der Erfindung diese beiden Betätigungsglieder drehfest miteinander verbunden, wobei diese Verbindung in einer einfachen Ausgestaltung der Erfindung nach Anspruch 11 über entsprechend vorgesehene Keile erfolgt.

Johann Hochreuter                    1 P 39

- 6 -

Um die erfindungsgemäße Lamellen-Sicherheits-rutschkupplung mit der entsprechenden Schaltein-richtung möglichst raumsparend und kompakt auszugestalten, ist das Abstützglied mit topfförmigen Schrauben versehen, die zur Aufnahme der jeweiligen Federeinrichtung dienen. Damit kann das Anpreß- und das Abstützglied hinreichend eng zueinander angeordnet werden.

In einer vorteilhaften Ausgestaltung der Erfindung nach Anspruch 13 ist es dabei möglich, durch Verstellen der topfartigen Schrauben die Federkraft der Federeinrichtung und damit die Anpreßkräfte auf die Kupplungslamellen einzustellen.

In einer Weiterbildung der Erfindung ist an dem Anpreßglied ein Führungszapfen für die Federeinrichtung vorgesehen, der über die topfförmigen Schrauben hinausragt. In vorteilhafter Weise läßt sich u. a. auch dadurch an seinem Ende eine Skala anbringen, die es ermöglicht, die eingestellten Anpreßkräfte auf die Kupplungslamellen unter Reibschlußbedingungen abzulesen.

Weiter Vorteile, Einzelheiten und Merkmale der Erfindung ergeben sich aus dem nachfolgend anhand von Zeichnungen erläuterten Ausführungsbeispiel. Dabei zeigen im einzelnen:

Figur 1 :    einen teilweisen Längsschnitt durch
             eine Lamellen-Sicherheitsrutschkupplung
             mit einer entsprechenden Schaltein-
             richtung;

Johann Hochreuter                    1 P 39

Figur 2 : eine stirnseitige Ansicht der Lamellen-
         Sicherheitsrutschkupplung.

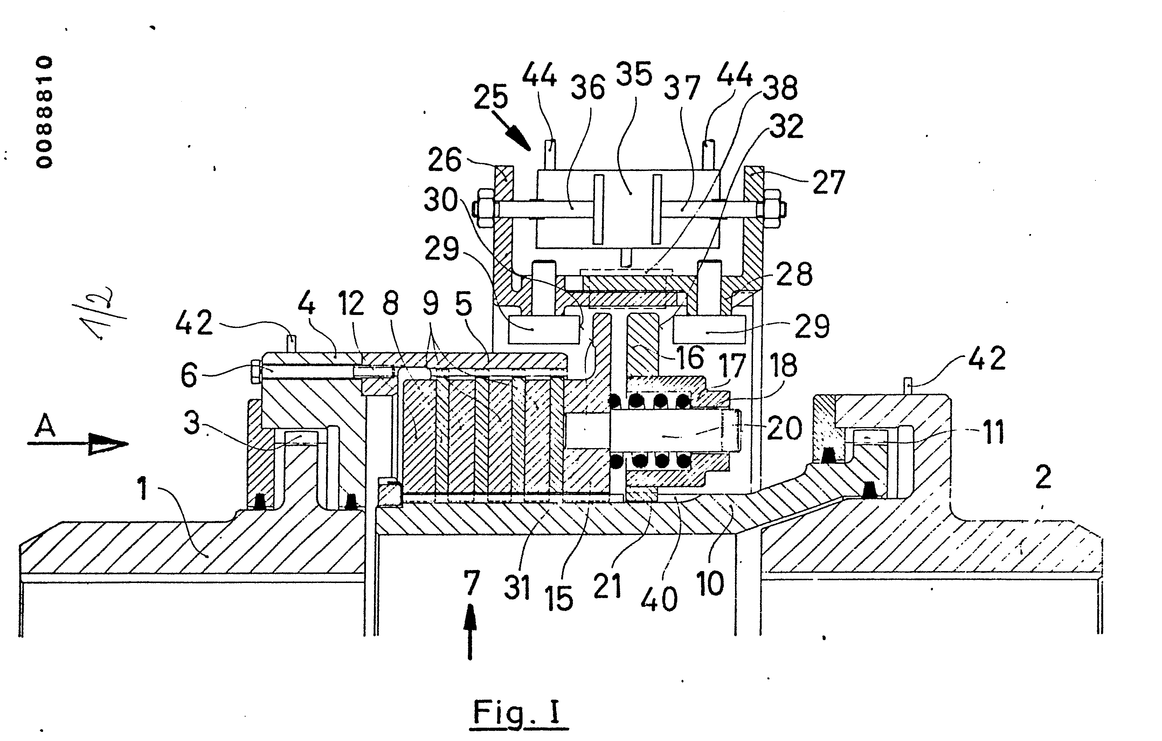

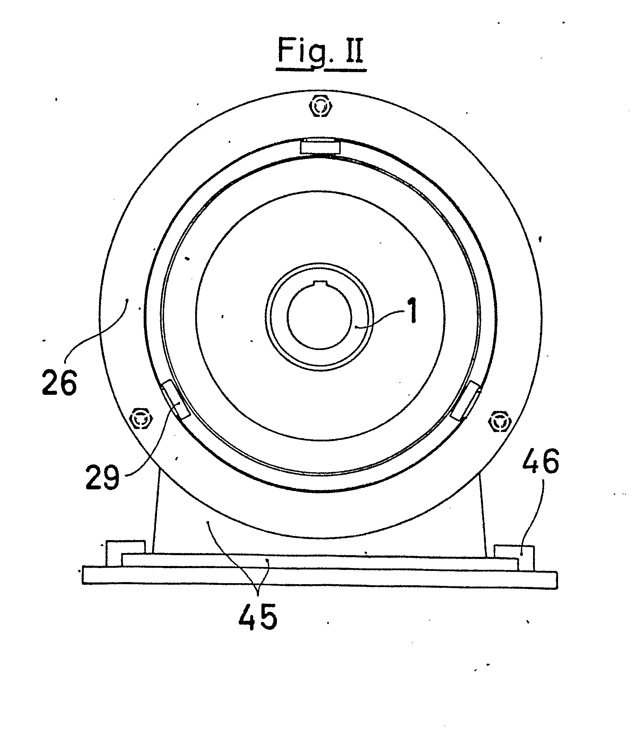

In den Fig. 1 und 2 ist mit 1 eine antriebseitige Nabe mit balliger Außenverzahnung und mit 2 die abtriebseitige Nabe bezeichnet. Die antriebseitige Nabe 1 ist mit einer balligen Außenverzahnung 3 versehen, die mit einer innenzylindrisch verzahnten Hülse 4 im Eingriff steht. Die Hülse 4 wiederum ist stirnseitig mit einer innenverzahnten Rutschkupplungshülse 5 über geeignete Verbindungsmittel, beispielsweise Bolzen 6 miteinander verbunden. Eine Lamellenkupplung 7 besteht in bekannter Weise aus einer innenverzahnten, gegen axiale Verschiebung gerichtete Abstützplatte 16 und aus Kupplungslamellen 8 und 9, die wechselweise nacheinander angeordnet und jeweils abwechselnd mit der außenliegenden und innenverzahnten Rutschkupplungshülse 5 bzw. mit einem innenliegenden, außenverzahnten Kupplungsnabenhals 10 über eine entsprechende Keilverzahnung im Eingriff stehen. Der Kupplungsnabenhals 10 ist abtriebseitig mit einer balligen Außenverzahnung 11 versehen, die mit der innenverzahnten abtriebseitigen Nabe 2 im Eingriff steht.

Abtriebseitig ist nach der Lamellenkupplung 7 eine Anpreßeinrichtung vorgesehen, bestehend aus einer innenverzahnten Anpreßplatte 15, einer innenverzahnten Abstützplatte 16, die mit Schrauben 17 versehen ist, die topfförmig ausgebildet ist. Die topfförmigen Schrauben 17 weisen an ihrem Ende jeweils eine Bohrung 18 auf, durch die ein mit der Anpreßplatte 15 festverbundener Führungszapfen 20 ragt.

Johann Hochreuter                    1 P 39

- 8 -

Im Inneren der topfartigen Schraube 17 ist eine
aus einer Feder 21 bestehende Federeinrichtung,
beispielsweise eine Teller- oder Schraubenfeder
vorgesehen.

In radialer Umfangsrichtung um die Anpreß- und Abstützplatte herum ist eine Schalteinrichtung 25
zum Ein- und Ausschalten der Lamellenkupplung vorgesehen. Die Schalteinrichtung 25 besteht dabei
aus zwei Betätigungsgliedern in Form eines inneren
Ringes 26 und einem äußeren Ring 27. An dem jeweiligen Ring 26 und 27 sind in Radialrichtung innenliegende Rollen 29 vorgesehen. Im ausgeschalteten
Zustand der Lamellenkupplung 7 wirken dabei jeweils
die Laufflächen 30 der Rollen 29 mit entsprechenden
Abschnitten 31 und 32 der Anpreßplatte 15 und der
Abstützplatte 16 zusammen. Dazu sind die beiden
Abschnitte 31 und 32 im wesentlichen zwischen den
jeweiligen Laufflächen 30 der Rollen 29 angeordnet.

Die Schalteinrichtung 25 wird über einen oder mehrere
gleichmäßig verteilt angeordnete oder einen zentralen
Druckzylinder 35 betätigt, der Druckkolben 36 und
37 umfaßt, die an dem jeweiligen inneren und äußeren
Ring 26, 27 befestigt sind.

Um eine drehfeste Verbindung zwischen dem inneren
Ring 26 und dem äußeren Ring 27 sicherzustellen,
sind Keile 38 durch überlappende Abschnitte des
inneren und äußeren Ringes hindurchgeführt.

- 9 -

Johann Hochreuter                    1 P 39

- 9 -

Nachfolgend wird auf die Funktion des Ein- und
Ausschaltvorganges der Lamellenkupplung eingegangen.

Im gezeigten Ausführungsbeispiel in Figur 1 ist
die Lamellenkupplung druckbelastet, d. h. daß
aufgrund des erzeugten Reibschlusses  zwischen den
Kupplungslamellen ein Drehmoment von der antriebseitigen Nabe 1 auf die abtriebseitige Nabe 2 übertragen wird. Der Anpreßdruck wird dabei durch die
Federn 21, die auf die Anpreßplatte 15 drücken, aufgebracht. Die Abstützung der Federkräfte erfolgt
über die topfförmigen Schrauben 17, und die Abstützplatte 16, die sich wiederum an einem abtriebseitigen Anschlag 40 auf dem Kupplungsnabenhals 10
abstützt.

Beginnt  nunmehr beispielsweise aufgrund einer unzulässigen Überlastung die Lamellenkupplung 7 durchzurutschen, so wird dies durch entsprechende, antriebs-
und abtriebseitig vorgesehene Induktionskontakte
für berührungsfreie Schlupfkontrolle erfaßt. Ein
nachgeschaltetes und nicht näher gezeigtes Steuergerät steuert ein, ebenfalls nicht näher gezeigtes
Hydraulikventil, um die Druckzylinder 35
betätigen. Dabei erfolgt in diesem Fall die Steuerung
derart, daß über Zuflußleitungen 44 das Druckmedium,
die Druckkolben 37 so druckbeaufschlagt, daß diese
die zugeordneten Betätigungsglieder in Form eines
inneren Ringes 26 und eines äußeren Ringes 27
aufeinander zubewegt.

- 10 -

Johann Hochreuter            1 P 39

Dadurch kommen die Laufflächen 30 der Rollen 29 an den entsprechenden Abschnitten 31 und 32 der Anpreßplatte 15 bzw. der Abstützplatte 16 jeweils außenseitig zur Anlage, um beide ebenfalls entgegen der Kraft der Feder 21 sozusammenzudrücken, daß diese beiden sich axial aufeinander zu bewegen. Dadurch werden die Kupplungslamellen druckentlastet und gelüftet, sodaß die Kupplungslamellen kraftlos aneinander liegen und dadurch die Kupplung ausgeschaltet wird. Da in diesem Fall die durch die Federeinrichtung über die Anpreßplatte 15 und die Abstützplatte 16 auf die Schalteinrichtung 25 einwirkenden Kräfte sich aufheben, d. h. die resultierende Null wird, werden durch den Ausschaltvorgang nach außen hin auf benachbarte Teile keine Kräfte abgeleitet.

Damit bei einer örtlichen Lageveränderung der Lamellenkupplung 7 in axialer Richtung die Rollen 29 sich mit ihren Ringen 26 und 27 immer drucklos einstellen können, sind die beiden Ringe 26 und 27 mit einer separaten Stützwand mit Fußplatte 45 versehen, die in einem Führungsschlitten 46 geführt wird.

Aufgrund der oben gemachten Erläuterung wird deutlich, daß die Steuerung der Schalteinrichtung 25 sowohl hydraulisch wie auch pneumatisch erfolgen kann. Möglich ist darüber hinaus ebenso, daß in den Abschnitten 31 und 32 entsprechende Rollen 29, beispielsweise kegelstumpfförmige Lagerrollen vorgesehen sind, die mit einer entsprechenden Ablauffläche an dem jeweiligen inneren und äußeren Ring 26 und 27 in umgekehrter Weise zusammenwirken.

Johann Hochreuter                           1 P 39

- 11 -

Ferner· ist es ebenso   möglich, wie nicht näher
gezeigt ist, daß die in  Umfangsrichtung
verteilten Druckzylinder 35 über eine gemeinsame
Stützwand 45 fest am Boden verankert sind. Ist in
diesem Fall die Schalteinrichtung 25 auch unsymmetrisch zu den beiden Abschnitten 31 und 32 der Anpreßplatte 15 und der Abstützplatte 16 angeordnet,
so beeinflußt dies die ordnungsgemäße Funktion nicht.
In diesem Fall kommen zwar aufgrund der unsymmetrischen Anordnung der Schalteinrichtung 25 die Laufräder entweder des inneren oder äußeren Ringes 26
oder 27 zuerst an dem entsprechenden Abschnitt 31
oder 32 der Anpreßplatte 15 bzw. der Abstützplatte 16
zur Anlage. Da in diesem Fall aber dann der Druck
in der entsprechenden Druckkammer des zugeordneten
Kolbens schnell stärker ansteigt, wird zunächst der
gegenüber liegende Kolben weiter nach innen bewegt,
bis auch die Rollen des zweiten Ringes an dem entsprechenden Abschnitt der Anpreßplatte bzw. der Abstützplatte zur Anlage kommen. Auch hierdurch erfolgt
eine individuelle Anpassung.

Beim Einschaltvorgang der Lamellenkupplung 7 erfolgt
eine umgekehrte Steuerung dahingehend, daß die parallel
geschalteten Druckzylinder 35 entlastet werden, wodurch die Federn 21 über die Anpreßplatte 15
mit dem Abschnitt 31 bzw. die Abstützplatte 16
mit deren Abschnitt 32 die Rollen 29 wieder so
auseinanderdrücken, daß die Anpreßplatte 15
wieder an den Kupplungslamellen zur Anlage kommt
und die Rutschkupplung einschaltet.

- 12 -

**0088810**

Johann Hochreuter                    1 P 39

- 12 -

Dabei läßt sich im eingeschalteten Zustand an dem abtriebseitigen Ende der Führungszapfen 20 an einer dort vorgesehenen Skala der eingestellte Kupplungsdruck ablesen. Durch Verdrehen der topfförmigen Schrauben 17 kann dabei der Kupplungsdruck eingestellt werden.

Zur Erzeugung der Ausschaltkraft durch mehrere gleichmäßig am Umfang verteilt angeordnete Hydraulik- oder Pneumatikzylinder kann auch nur ein einziger, geschlossener Ringzylinder verwendet werden, an dem die Anpreßrollen 29 angeordnet sind.

Das gezeigte Ausführungsbeispiel bezieht sich auf eine Lamellen-Sicherheitsrutschkupplung in Zusammenwirkung mit einer flexiblen Zahnkupplung, um Wellenfluchtfehler der zu kuppelnden Wellenzapfen auszugleichen. Der Einsatz der erfindungsgemäßen Lamellen-Sicherheitsrutschkupplung ist aber auf dieses Anwendungsgebiet nicht beschränkt.

PATENTANWÄLTE

# ANDRAE · FLACH · HAUG · OTTO 0088810

EUROPEAN PATENT ATTORNEYS

. Patentanwalt Dipl.-Phys. Flach, Max-Josefs-Platz 6, D-8200 Rosenheim .

**ROSENHEIM**
Dipl.-Phys. Dieter Flach
Max-Josefs-Platz 6
D-8200 Rosenheim
Telefon: (0 80 31) 1 93 52
Telegramm: Physicist Rosenheim

**MÜNCHEN**
Dipl.-Chem. Dr. Steffen Andrae
Dipl.-Ing. Dietmar Haug
Dipl.-Ing. Dr. Dieter Otto
Steinstraße 44
D-8000 München 80
Telefon: (0 89) 48 20 89
Telegramm: pagema München
Telex: 5 216 281 afho d

Johann Hochreuter, Brauhausstraße 6, 8800 Ansbach

1 P 39

------------------------------------------------------------

Lamellen-Sicherheitsrutschkupplung

------------------------------------------------------------

<u>Ansprüche:</u>

1. Lamellen-Sicherheitsrutschkupplung, insbesondere für eine ausgleichsfähige Zahnkupplung mit einer zur Druckbeaufschlagung der Lamellenrutschkupplung (7) vorgesehenen Druckeinrichtung, bestehend aus einem Anpreßglied (Anpreßplatte 15), einem Abstützglied (Abstützplatte 16) und einer dazwischen wirkenden Federeinrichtung (Feder 21), dadurch gekennzeichnet, daß über eine Schalteinrichtung (25), die sich über das Anpreßglied (Anpreßplatte 15) und das Abstützglied (Abstützplatte 16) abstützt, das Anpreßglied (Anpreßplatte 15) und das Abstützglied (Abstützplatte 16) entgegen der Kraft der Federeinrichtung (Feder 21) zusammenpreßbar sind.

2. Lamellen-Sicherheitsrutschkupplung nach Anspruch 1, dadurch gekennzeichnet, daß neben dem kupplungslamellenseitig liegenden Anpreßglied (Anpreßplatte 15) auch das Abstützglied (Abstützplatte 16) axial verschiebbar angeordnet ist.

3. Lamellen-Sicherheitsrutschkupplung nach Anspruch 1 oder 2, dadurch gekennzeichnet, daß die Schalteinrichtung (25) zwei axial verstellbare Betätigungsglieder (innerer Ring 26, äußerer Ring 27) umfaßt, über die ein Zusammenpressen des Anpreßgliedes (Anpreßplatte 15) und des Abstützgliedes (Abstützplatte 16) erfolgt.

4. Lamellen-Sicherheitsrutschkupplung nach Anspruch 3, dadurch gekennzeichnet, daß an den Betätigungsgliedern (innerer Ring 26, äußerer Ring 27) Rollen (29) vorgesehen sind, deren Laufflächen (30) mit dem jeweiligen Anpreß- bzw. Abstützglied (Anpreßplatte 15 bzw. Abstützplatte 16) zusammenwirken, um diese entgegen der Kraft der Federeinrichtung (Feder 21) zusammenzudrücken.

5. Lamellen-Sicherheitsrutschkupplung nach Anspruch 3, dadurch gekennzeichnet, daß an dem Anpreß- bzw. Abstützglied (Anpreßplatte 15, Abstützplatte 16) Rollen (29) vorgesehen sind, die mit einer entsprechenden Ablauffläche der Betätigungsglieder (innerer Ring 26, äußerer Ring 27) zusammenwirken, um das Anpreß- und das Abstützglied (Anpreßplatte 15, Abstützplatte 16) zusammenzudrücken.

Johann Hochreuter                    1 P 39

6. Lamellen-Sicherheitsrutschkupplung nach Anspruch 5,
dadurch gekennzeichnet, daß die Betätigungsglieder
(innerer Ring 26, äußerer Ring 27) über mehrere
am Umfang verteilte oder nur einen zentralen Druckzylinder (35) betätigt werden.

7. Lamellen-Sicherheitsrutschkupplung nach Anspruch 6,
dadurch gekennzeichnet, daß die oder der Druckzylinder (35) hydraulisch bzw. pneumatisch betätigbar sind.

8. Lamellen-Sicherheitsrutschkupplung nach Anspruch
6 oder 7, dadurch gekennzeichnet, daß die Druckzylinder
(35) zur Distanzeinstellung zwischen den Betätigungsgliedern (innerer Ring 26, äußerer Ring 27) teleskopartig ausfahrbar sind.

9. Lamellen-Sicherheitsrutschkupplung nach Anspruch
6, 7 oder 8, dadurch gekennzeichnet, daß die oder der
Druckzylinder (35) ausfahrbare Druckkolben (36, 37)
umfassen.

10. Lamellen-Sicherheitsrutschkupplung nach einem
der Ansprüche 1-9, dadurch gekennzeichnet, daß die
beiden Betätigungsglieder drehfest miteinander verbunden sind.

11. Lamellen-Sicherheitsrutschkupplung nach Anspruch
10, dadurch gekennzeichnet, daß die Verdrehsicherung
zwischen den beiden Betätigungsgliedern (innerer
Ring 26, äußerer Ring 27) über Keile (38) erfolgt.

12. Lamellen-Sicherheitsrutschkupplung nach einem
der Ansprüche 1-11, dadurch gekennzeichnet, daß
in dem Abstützglied (Abstützplatte 16) topfförmige
Schrauben (17) zur Aufnahme der Federeinrichtung

Johann Hochreuter                    1 P 39

(Feder 21) vorgesehen sind.

13. Lamellen-Sicherheitsrutschkupplung nach Anspruch 12, dadurch gekennzeichnet, daß durch Verdrehen der Schrauben (17) die Anpreßkräfte auf die Kupplungslamellen (8) einstellbar sind.

14. Lamellen-Sicherheitsrutschkupplung nach einem der Ansprüche 1-13, dadurch gekennzeichnet, daß mit dem Anpreßglied (Anpreßplatte 15) Führungszapfen (20) für die Federeinrichtung (Feder 21) vorgesehen sind, die über die topfförmigen Schrauben (17) durch Bohrungen (18) hinausragen.

15. Lamellen-Sicherheitsrutschkupplung nach Anspruch 14, dadurch gekennzeichnet, daß an dem abtriebseitigen Ende der Führungszapfen (20) eine Skala vorgesehen ist.

Fig. I

2/2

**Fig. II**

Europäisches
Patentamt

EUROPÄISCHER RECHERCHENBERICHT

0088810
Nummer der Anmeldung

EP 82 10 1985

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int. Cl. ³) |
|---|---|---|---|
| | --- | | F 16 D 43/21 |
| X | CH-A- 221 671 (GEBR. SULZER AG) * Anspruch; Unteransprüche 1, 8; Seite 2, Zeilen 29-64; Figur * | 1-3 | F 16 D 7/02 |
| | --- | | |
| A | DE-A-2 816 374 (CONTIROLL DÖPPER SCHWARTZ GMBH) * Ansprüche 1, 9; Seite 10, Zeile 10 bis Seite 11, Zeile 16; Figur 4 * | 1 | |
| | --- | | |
| A | DE-A-2 300 393 (J. HOCHREUTER) * Ansprüche 1-5; Figuren 1, 2 * | 12-15 | |
| | --- | | |
| A | DE-U-1 712 949 (MASCHINENFABRIK STROMAG) | | RECHERCHIERTE SACHGEBIETE (Int. Cl. ³) |
| | ----- | | F 16 D 7/00 F 16 D 43/00 F 16 H 35/10 |

Der vorliegende Recherchenbericht wurde für alle Patentansprüche erstellt.

| Recherchenort | Abschlußdatum der Recherche | Prüfer |
|---|---|---|
| BERLIN | 20-10-1982 | LEMBLE Y.A.F.M. |